# EUROPÄISCHE PATENTSCHRIFT

(11) **EP 1 982 073 B1**
(45) Veröffentlichungstag und Bekanntmachung des Hinweises auf die Patenterteilung: **19.10.2011**
(21) Anmeldenummer: 07786543.4
(22) Anmeldetag: 03.08.2007
(51) Int. Cl.: F04C 2/10, F04C 11/00

(54) **HYDROSTATISCHE ENERGIEERZEUGUNGSEINHEIT**
HYDROSTATIC ENERGY GENERATION UNIT
UNITÉ HYDROSTATIQUE DE PRODUCTION D`ÉNERGIE

(30) Priorität: 08.09.2006 DE 102006042810
(43) Veröffentlichungstag der Anmeldung: 22.10.2008
(73) Patentinhaber: Voith Turbo GmbH & Co. KG, 89522 Heidenheim (DE)
(72) Erfinder: BERGER, Jürgen, 89547 Gerstetten (DE); KIRSCHINGER, Christoph, 89522 Heidenheim (DE); BARTOSCH, Stephan, 89192 Rammingen (DE)
(74) Vertreter: Dr. Weitzel & Partner
(86) Internationale Anmeldenummer: PCT/EP2007/006876
(87) Internationale Veröffentlichungsnummer: WO 2008/028546

(56) Entgegenhaltungen:
- EP-A- 1 443 210
- WO-A-01/73295
- DE-A1- 10 129 488

## Beschreibung

Die Erfindung betrifft eine hydrostatische Energieerzeugungseinheit, insbesondere für den Einsatz in Fahrzeugen.

Straßen- und Schienenfahrzeuge, die mittels einer Verbrennungskraftmaschine angetrieben werden, bedürfen eines elektrischen Generators zur Erzeugung elektrischer Hilfsenergie für den Betrieb unterschiedlicher elektrischer Komponenten und Stellantriebe des Fahrzeugs. Aufgrund der während des Traktionsbetriebs der Verbrennungskraftmaschine vorliegenden unterschiedlichen Drehzahlen ist es nachteilig, einen elektrischen Generator unmittelbar über die Verbrennungskraftmaschine und damit mit variablen Drehzahlen anzutreiben. Aus dem Stand der Technik ist es bekannt, zum Antrieb des elektrischen Generators einen hydrostatischen Antrieb zu verwenden, so dass die Verbrennungskraftmaschine zunächst eine Hydraulikpumpe antreibt, welche einen Volumenstrom von Arbeitsmedium zum Antrieb eines hydrostatischen Motors erzeugt, welcher wiederum den elektrischen Generator treibt. Eine mögliche Ausgestaltung wird durch die DE 101 29 488 A1 offenbart.

Die bekannten Lösungen zur Koppelung eines hydrostatischen Motors mit einem Generator weisen mehrere Nachteile auf. Zum einen ist die in der DE 101 29 488 A1 beschriebene Hintereinanderanordnungen der beiden Komponenten großbauend. Darüber hinaus ist der vorgeschlagene ungekapselte Betrieb des Hydromotors sehr geräuschintensiv. Ferner zeichnen sich die bekannten Lösungen durch eine mechanische Kopplung des hydrostatischen Motors mit dem elektrischen Generator aus, die den Übertritt des zum Betrieb des hydrostatischen Motors verwendeten Arbeitsmediums zum elektrischen Generator verhindert. Ein solchermaßen angetriebener elektrischer Generator bedarf einer zusätzlichen Vorrichtung zur Kühlung, insbesondere für dessen Wicklungen, Gleichrichter und Leistungselektronik, wobei dies üblicherweise über eine Lüftereinheit und damit über Luftkühlung realisiert wird. Diese weiteren Komponenten erhöhen wiederum die Gesamtgröße der Baueinheit.

Der Erfindung liegt die Aufgabe zugrunde, eine elektrische Energieerzeugungseinheit der eingangs genannten Art so weiterzuentwickeln, dass eine möglichst kompakte, kleinbauende Einheit, entsteht, die sich durch eine geringe Geräuschentwicklung und eine gute Kühlleistung auszeichnet. Ferner sollte die Energieerzeugungseinheit konstruktiv und fertigungstechnisch einfach gestaltet sein.

Zur Lösung der Aufgabe haben die Erfinder erkannt, dass eine vorteilhaft kleinbauende hydrostatische Energieerzeugungseinheit einen elektrischen Generator aufweist, dessen Rotor den hydrostatischen Motor koaxial umschließt. Dieses Bauprinzip ist gemäß der WO 01/73295 A1, als nächstliegender Stand der Technik angesechen, für Motorpumpenaggregate bekannt, wobei jedoch anstatt eines elektrischen Generators ein Elektromotor und anstelle des hydrostatischen Motors eine in Innenzahnradbauweise ausgestaltete Pumpe verwendet wird. Zur koaxialen Umschließung der Innenzahnradpumpe ist der Rotor des Elektromotors im Axialschnitt U-förmig ausgebildet, wobei stegseitig eine Innenverzahnung vorgesehen ist, welche ein Ritzel kämmt, das mit der Pumpenwelle verbunden ist und so die Innenzahnradpumpe antreibt.

Das aus der WO 01/13295 A1 bekannt gewordene Motorpumpenaggregat lässt sich auch bei der Verwendung eines hydrostatischen Motors anstatt eines hydrostatischen Pumpe und eines elektrischen Generators anstatt eines Elektromotors nicht unmittelbar in einem Hydraulikkreis eines Fahrzeugs verwenden. Der Grund hierfür ist die Selbsthemmung von Innenzahnradmotoren im Bereich der Haftreibung sowie die sich hieraus ergebende Problematik des Anlaufens einer solchen hydrostatischen Energieerzeugungseinheit aus dem Stillstand. Die Erfinder haben jedoch erkannt, dass eine Baueinheit aus einem Innenzahnradmotor mit einem elektrischen Generator, dessen Rotor den Innenzahnradmotor koaxial umschließt, in konstruktiv einfacher Art und Weise mit einer zusätzlichen Anlaufvorrichtung verbunden werden kann.

Im einfachsten Fall wird als zusätzliche Anlaufvorrichtung der elektrische Generator selbst verwendet. Ist dieser als Gleichstrom-Synchrongenerator ausgebildet, so kann zum Anlaufen der Einheit zum motorischen Betrieb der elektrische Generator über eine Batterie gespeist werden. Besonders vorteilhaft für die Bordnetzversorgung in Fahrzeugen ist jedoch die Ausführung der Energieerzeugungseinheit mit einem bürstenlosen Drehstrom-Synchrongenerator, welcher koaxial mindestens einen Hydrostatikmotor umschließt. Bei Verwendung eines solchen Generators kann durch Anbringen einer Gleichstrom-Zusatzwicklung trotzdem das einfache Anlaufen über Batteriespeisung ermöglicht werden. Weiterhin ist es möglich, einen solchen Stromerzeuger über entsprechende Frequenzumrichtertechnik anlaufen zu lassen.

In einer Weitergestaltung wird zusätzlich zum koaxial angeordneten Innenzahnradmotor ein weiterer hydrostatischer Motor verwendet, wobei dann eine besonders kompakte Baueinheit entsteht, wenn für den weiteren hydrostatischen Motor ebenfalls ein rotatorischer Antrieb verwendet wird und dessen Drehachse mit jener des Innenzahnradmotors fluchtend ausgebildet ist. Hieraus folgt ein konstruktiv einfacher Ansatz zum Antrieb des elektrischen Generators. Durch den zweiten, weiteren Hydrostatikmotor ist es nun möglich, einen solchen hydrostatischen Antrieb als Ergänzung zum Innenzahnradmotor zu verwenden, der sich durch besonders gute Anlaufeigenschaften auszeichnet. Als ein solcher Langsamläufer kann beispielsweise ein Kolbenmotor verwendet werden. Durch den zweiten weiteren Hydrostatikmotor besteht dann die Möglichkeit, diesen als zusätzliche Anlaufvorrichtung zu verwenden, so dass ein Anlaufen aus dem Start auch ohne Zugriff auf eine zusätzliche Energieversorgungsquelle zum motorischen Betrieb des elektrischen Generators möglich ist. Wird eine bestimmte Solldrehzahl erreicht, kann für den Normalbetrieb der Innenzahnradmotor verwendet werden, der sich durch eine geringe Geräuschemission aufgrund der koaxialen Kapselung durch den Rotor des elektrischen Generators auszeichnet. Darüber hinaus ist eine Ausgestaltung denkbar, bei der auch der zweite, weitere Hydrostatikmotor vom Rotor des elektrischen Generators gekapselt wird.

Eine besonders vorteilhafte Anlaufvorrichtung ergibt sich bei Integration einer hydraulischen Verdreheinrichtung in die Energieerzeugungseinheit. Bevorzugt umfasst die hydraulische Verdreheinrichtung einen Verdrehkolben, welcher bei der Ausführung einer Stellbewegung in wenigstens mittelbare Wirkverbindung zu den rotierenden Komponenten des Hydrostatikmotors tritt. Hierbei ist es auch möglich, dass diese Wirkverbindung über den Rotor des mit dem Hydrostatikmotor gekoppelten Generators erfolgt. Der Verdrehkolben wird somit eine rotierende Komponente der Energieerzeugungseinheit mit dem Ziel anschieben, die Haftreibung im Innenzahnradmotor und damit dessen Selbsthemmung zu überwinden und so ein Anlaufen des Hydrostatikmotors zu ermöglichen. Hierzu wird sich der Verdrehkolben im Wesentlichen tangential, linear relativ zu der für das Anschieben verwendeten rotierenden Komponente bewegen.

In den Verdrehkolben ist ein Verschiebekörper integriert, der transversal zur Stellbewegung des Verdrehkolbens aus diesem ausgefahren werden kann. Zur Mitnahme der rotierenden Komponente wird der Verschiebekörper im Verlauf der Stellbewegung des Verdrehkolbens in einen form- oder reibschlüssigen Anlagekontakt zu einem Umfangsbereich der rotierenden Komponente gebracht. In einer vorteilhaften Ausgestaltung ist an einem Umfangsbereich der rotierenden Komponente eine Verzahnung vorgesehen. Diese kann zum einen unmittelbar auf den Umfang einer Endfläche der rotierenden Komponente umlaufend ausgebildet werden. Denkbar ist jedoch eine Gestaltung, bei der eine Verzahnung stirnseitig im Bereich des Außenumfangs der rotierenden Komponente vorgesehen ist.

Durch eine entsprechende Ausgestaltung der Endfläche des Verschiebekörpers wird dieser in die Verzahnung im Verlauf der transversalen, linearen Stellbewegung des Verdrehkolbens eingreifen, wodurch eine Mitnahme der rotierenden Komponente und damit ein Anschieben des Hydrostatikmotors erfolgt. Die transversale Bewegung des Verschiebekörpers zum Verdrehkolben kann durch elastische Elemente, beispielsweise eine Feder, bewirkt werden. Denkbar sind aber auch Gestaltungen, bei denen der Verschiebekörper aktiv mittels eines zugeordneten hydraulischen oder pneumatischen Stellelements in Richtung auf die Anlagefläche auf der rotierenden Komponente im Verlauf der Stellbewegung des Verdrehkolbens bewegt wird. Anstatt eines formschlüssigen Eingreifens der Endfläche des Verschiebekörpers auf entsprechend ausgeformte Gegenstücke der rotierenden Komponente, beispielsweise eine Verzahnung, kann die Mitnahme der rotierenden Komponente durch die Bewegung des Verschiebekörpers auch mittels Reibungskräften erfolgen.

Besonders vorteilhaft ist eine Gestaltung, bei der der Verdrehkolben als Hydraulikkolben ausgebildet ist und durch eine Druckbeaufschlagung mit dem zum Antrieb des Hydrostatikmotors verwendeten Arbeitsmediums erfolgen. Die Ausfahrbewegung des Verdrehkolbens und damit der Mitnahmeeffekt über den Verschiebekörper, der zum Anlaufen des Hydrostatikmotors führt, wird demnach durch eine einfache Druckbeaufschlagung des Arbeitsmediums erfolgen, ohne dass hierfür ein zusätzlicher Steuerungsaufwand erforderlich ist. Solange der Druck des Arbeitsmediums aufrechterhalten wird, erfolgt der Antrieb des Hydrostatikmotors. Während dieses Arbeitsintervalls wird der Verdrehkolben in einer ausgefahrenen Stellung verbleiben, die erst mit dem Druckloswerden des Arbeitsmediums zur Ausgangsstellung zurückgeführt wird. Vorteilhafterweise kann hierfür dem Verdrehkolben eine elastische Feder zur Rückführung in die Neutralstellung zugeordnet sein.

Aufgrund der konstruktionsbedingten kompakten Bauweise kann die erfindungsgemäße Verbindung eines koaxial angeordneten hydrostatischen Motors und eines elektrischen Generators und möglicher weiterer axial fluchtend angeordneter zusätzlicher hydrostatischer Motoren innerhalb eines geschlossenen Gehäuses untergebracht werden, in dem zur Kühlung das Arbeitsmedium zirkuliert, das heißt der elektrische Generator wird tauchend ausgeführt. Eine solche Konstruktion erlaubt ferner die Verwendung des Arbeitsmediums zur Kühlung der elektronischen Komponenten des elektrischen Generators. So kann beispielsweise der Gleichrichter einer Gleichstromsynchronmaschine und deren Wicklungen ebenfalls tauchend ausgeführt werden, wodurch eine besonders effiziente Wärmeabfuhr möglich ist. Daraus resultiert die Möglichkeit, die elektrischen Komponenten ohne großbauende Kühlkörper beziehungsweise zusätzliche Einrichtungen zur Luftkühlung, auszubilden, wodurch wiederum eine kompakte Baueinheit resultiert.

Die Energieerzeugungseinheit ist vorzugsweise so gestaltet, dass auch der elektrische Generator in das Arbeitsmedium eintaucht. Neben der verbesserten Kühlfunktion besteht ein weiterer Vorteil darin, dass bei der Verwendung von Hydrauliköl als Arbeitsmedium gleichzeitig die Schmierung der Lagerkomponenten des hydrostatischen Motors sowie des elektrischen Generators sichergestellt ist.

Zur einfachen Konstruktion wird ferner bevorzugt, dass sich das Lager des Rotors des elektrischen Generators auf dem Gehäuse des Innenzahnradmotors abstützt, wodurch eine sowohl kompakte wie auch fertigungstechnisch einfache Einheit aus einem koaxial angeordnetem Hydrostatikmotor und dem diesen umgebenden elektrischen Generator entsteht.

Die erfindungsgemäße hydrostatische Energieerzeugungseinheit dient zum einen dem Zweck der Energieerzeugung für elektrische Nebenverbraucher in Fahrzeugen, zum anderen kann sie aber auch dazu verwendet werden, elektrische Energie aus der Bremsenergie des Fahrzeugs zurückzugewinnen, da die Versorgung des hydrostatischen Motors mit druckbeaufschtagtem Arbeitsmedium wechselweise aus verschiedenen Antriebsquellen erfolgen kann. Die Verwendung von wenigstens zwei hydrostatischen Motoren in der Energieerzeugungseinheit, das heißt der Verwendung eines zum koaxial angeordneten Innenzahnradmotor zusätzlichen hydrostatischen Motors, ermöglicht eine vorteilhafte Ausgestaltung, bei welcher die hydrostatischen Motoren mit Arbeitsmedium aus unterschiedlichen Quellen versorgt werden und die hierfür vorgesehenen versorgungsseitigen Hydraulikkreise voneinander getrennt sind. Durch diese Maßnahme kann ein separater Hydraulikkreis förderseitig über Bremsenergie angetrieben werden. Ebenso ist es möglich, den hydrostatischen Energieerzeuger über einen längeren Zeitraum aus Druckspeichern zu speisen, welche jeweils aus Bremsenergie wieder aufgeladen werden.

Nachfolgend wird anhand von Figuren eine vorteilhafte Ausgestaltung der erfindungsgemäßen Energieerzeugungseinheit dargestellt. Im Einzelnen ist Folgendes gezeigt:
- Figur 1: zeigt einen Axialschnitt durch eine erfindungsgemäße Energieerzeugungseinheit mit zwei Hydrostatikmotoren, welche als Innenzahnradmotoren ausgebildet sind.
- Figur 2: zeigt das Wirkungsprinzip einer Anlaufvorrichtung, welche einen Verdrehkolben mit einem integrierten Verschiebekörper umfasst.

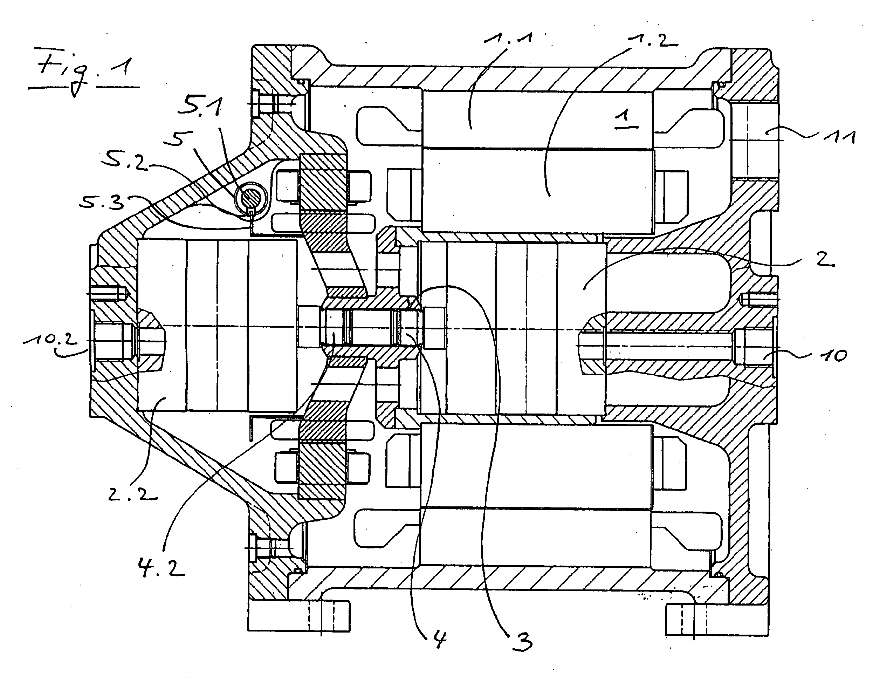

Figur 1 zeigt die erfindungsgemäße Energieerzeugungseinheit im Axialschnitt. Hierbei ist die Anordnung des Rotors 1.2 als Innenläufer zum Stator 1.1 des elektrischen Generators 1 dargestellt. Besonders bevorzugt ist die Verwendung eines bürstenlosen, fremderregten Drehstrom-Synchrongenerators, wobei als Erregermaschine die mit dem Bezugszeichen 6 versehene Einheit verwendet wird. Zum Antrieb des elektrischen Generators 1 wird ein koaxial zum Rotor 1.2 angeordneter Hydrostatikmotor verwendet, der als Innenzahnradmotor 2 ausgebildet ist. Hierbei umschließt der Rotor 1.2 des elektrischen Generators 1 den Innenzahnradmotor 2, was zu einer besonders kompakten und stark geräuschgedämpften Einheit führt. Die Übertragung der Antriebskraft durch den Innenzahnradmotor 2 erfolgt über ein Ritzel 4 fluchtend zur Drehachse des Innenzahnradmotors 2, welches eine Innenverzahnung 3 am Rotor 1.2 des elektrischen Generators 1 kämmt. Wie in Figur 1 dargestellt, erfolgt die Kapselung des Innenzahnradmotors 2 durch eine im Schnitt U-förmige Ausgestaltung des Rotors 1.2 des elektrischen Generators 1, so dass die Innenverzahnung 3 im Bereich des Verbindungsstegs der beiden Schenkel des U-förmigen, den Innenzahnradmotor 2 umhüllenden Teils des Rotors 1.2 ausgebildet ist. Gemäß einer vorteilhaften Ausgestaltung ist der Rotor 1.2 des elektrischen Generators 1 auf dem Gehäuse des Innenzahnradmotors 2 gelagert.

Gemäß einer bevorzugten Ausführung taucht der elektrische Generator 1 einschließlich seiner Erregermaschine 6 in dem zum Antrieb des hydrostatischen. Motors 2 verwendeten Arbeitsmedium. Neben der vereinfachten Schmierung aller rotierenden Komponenten der Energieerzeugungseinheit durch das Arbeitsmedium erfolgt auch ein effektives Abführen der im elektrischen Generator 1 erzeugten Abwärme. Insbesondere bei einer Ausführung des elektrischen Generators 1 als bürstenloser, fremderregter Drehstrom-Synchrongenerator kann die zugeordnete Erregermaschine 6 sowie die Wicklungen des Rotors 1.2 und des Stators 1.1 auf einfache Art und Weise mittels des Arbeitsmediums gekühlt werden. Damit entfällt die Notwendigkeit zur Ausbildung separater Kühlkörper beziehungsweise diese können kompakt gestaltet werden, so dass die Energieerzeugungseinheit entsprechend kleinbauend ausgebildet werden kann.

Fig. 1 zeigt ferner ein Ausführungsbeispiel der Energieerzeugungseinheit, für das neben dem koaxial zum elektrischen Generator 1 angeordneten Innenzahnradmotor 2 ein weiterer Hydrostatikmotor 2.2 verwendet wird. Dieser ist fluchtend bezüglich seiner Drehachse zum ersten Innenzahnradmotor 2 angeordnet und greift ebenfalls auf die Innenverzahnung im Rotor 1.2. Durch die doppelt ausgestaltete Ausbildung des hydrostatischen Antriebs ist es möglich, die Energieerzeugungseinheit aus zwei separaten Druckmittelkreisen zu speisen.

Werden beide Hydrostatikmotoren 2, 2.2 in einer alternativen Ausgestaltung mit Arbeitsmedium aus dem gleichen Druckmittelkreis beschickt, so ist es möglich, die beiden hydrostatischen Motoren unterschiedlich auszubilden, d.h. für unterschiedliche Drehzahlbereiche zu verwenden. Hierbei kann einer der beiden Hydrostatikmotoren als Teil einer Anlaufvorrichtung verwendet werden, indem anstatt eines Innenzahnradmotors eine aus dem Stand anlaufende Kolbenmaschine verwendet wird. Für den Fall, dass die beiden Hydrostatikmotoreh 2, 2.2 aus unterschiedlichen Druckmittelkreisen beschickt werden, ist es denkbar, einen der beiden Hydrostatikmotoren einer Speichereinheit, beispielsweise einem hydrostatischen Blasenspeicher zuzuordnen, der wiederum bei einer Bremsung des Fahrzeugs durch eine separate Baueinheit zur Energierückgewinnung beladen wird. Entsprechend sind der Innenzahnradmotor 2 und der zweite, weitere Hydrostatikmotor 2.2 mit separaten Einlassöffnungen 10, 10.2 zur individuellen Zuführung von Arbeitsmedium versehen. Mit der in Fig. 1 dargestellten Ausgestaltung liegt eine gemeinsame Auslassöffnung 11 für das Arbeitsmedium vor.

Erfindungsgemäß wird für die Energieerzeugungseinheit zum Anlaufen des Innenzahnradmotors 2, der vom Rotor 1.2 des elektrischen Generators umschlossen ist, eine Anlaufvorrichtung 5 verwendet. Wird als elektrischer Generator 1 ein bürsten loser, fremderregter Drehstrom-Synchrongenerator verwendet, so kann über Frequenzumrichter ein Anlaufen realisiert werden. Alternativ kann der elektrische Generator 1 so ausgestaltet sein, dass mittels einer zusätzlichen Gleichstromwicklung, welche über eine weitere Energiequelle, beispielsweise die Batterie, gespeist wird, zum Anlaufen gebracht wird, wodurch über die Getriebekoppelung der Innenzahnradmotor 2 angeschoben wird.

In einer weiteren vorteilhaften Ausgestaltung erfolgt das Anlaufen durch die Hydrostatik. Dies ist deshalb vorteilhaft, da keine zusätzliche Steuerungstechnik wie beim Anlaufen über den elektrischen Generator notwendig ist, stattdessen ist es lediglich nötig, das Arbeitsmedium unter Druck zu setzen. Gemäß einer ersten Ausführungsvariante wird hierfür der zweite, weitere Hydrostatikmotor verwendet. In einer besonders bevorzugten Weitergestaltung ist jedoch eine separate Anlaufvorrichtung 5 vorgesehen, welche in wenigstens mittelbare Wirkverbindung zu dem vom Rotor 1.2 des elektrischen Generators 1 gekapselten Innenzahnradmotor 2 tritt. Besonders vorteilhaft hat sich hierfür ein hydraulisches Stellelement erwiesen, welches eine lineare, zu einer rotierenden Komponente der Energieerzeugungseinheit transversale Bewegung ausführen kann.

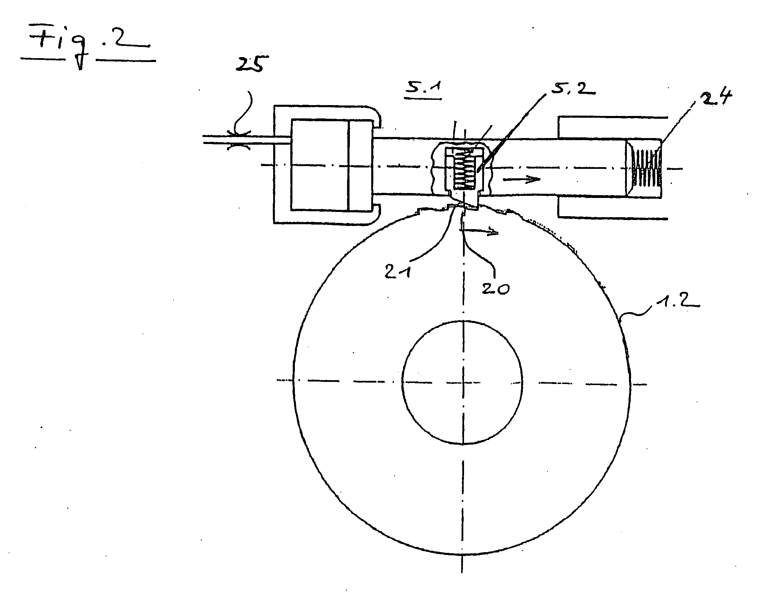

Gemäß der in Figur 1 gezeigten Ausgestaltung ist ein hydraulisches Stellelement, welches in der vorliegenden Anmeldung als Verdrehkolben 5.1 bezeichnet wird, so angeordnet, dass eine Ausfahrbewegung desselben im Wesentlichen tangential zur Drehbewegung des Rotors 1.2 ist. Integriert in den Stößel des Verdrehkolbens 5.1 ist ein Verschiebekörper 5.2 vorgesehen, welcher relativ zur Achse des Verdrehkolbens 5.1 transversal ausgefahren werden kann. Diese Ausfahrbewegung kann aktiv über ein pneumatisches oder hydraulisches Element erfolgen oder wird gemäß einer vorteilhaften Ausgestaltung durch ein elastisches Federelement realisiert. Wird der Verdrehkolben 5.1 mittels des Arbeitsmediums, welches auch zum Antrieb des Innenzahnradmotors 2 Verwendung findet, mit Druck beaufschlagt, so folgt eine Stellbewegung, welche linear und transversal zu einem Umfangsbereich des Rotors 1.2 verläuft. Für die in Figur 1 gezeigte Ausgestaltung gerät im Verlauf dieser Ausfahrbewegung der Verschiebekörper 5.2 in einen Anlagekontakt mit dem Umfangsbereich eines mit dem Rotor 1.2 verbundenen Flanschs 5.3 und nimmt diesen mit. Dieser Anlagekontakt kann form- oder reibschlüssig erfolgen, wobei die erste Variante in der Figur 2 dargestellt ist.

Im Einzelnen zeigt Figur 2 den Verdrehkolben 5.1 und den integrierten Verschiebekörper 5.2. Gemäß der gezeigten Ausgestaltung liegt eine Verzahnung 20 auf dem Umfang des Rotoraußengehäuses vor, in welches eine abgeschrägte Endfläche 21 des Verschiebekörpers 5.2 eingreift, wenn sie durch die Stellbewegung des Verdrehkolbens in die Engstelle zwischen der Verzahnung und dem Stößel gebracht wird. Durch diesen Wirkeingriff wird der Rotor durch die lineare, transversale Bewegung des Verdrehkolbens 5.1 in Drehung versetzt, wodurch auch der Innenzahnradmotor 2 eine Drehbewegung aufnimmt. Hierdurch wird die Haftreibung so weit überwunden, dass ein Anlaufen des Innenzahnradmotors 2 möglich ist. Gemäß einer vorteilhaften Ausgestaltung verbleibt dann, solange während der nachfolgenden Betriebsphase der Druck in der Zuleitung für das Arbeitsmedium aufrechterhalten wird, der Verdrehkolben 5.1 in einer ausgefahrenen Position und wird erst nach dem Druckloswerden durch ein elastisches Element, beispielsweise mittels der in Figur 1 dargestellten Druckfeder 24, in seine Ausgangsposition zurückgeführt. Diese Ausgestaltung hat den Vorteil, dass keine Steuerungselektronik zur Steuerung der Anlaufvorrichtung 5 notwendig ist. Vorteilhafterweise werden lediglich passive Elemente, wie die in Figur 2 dargestellte Drossel 25, in der Zufuhrleitung für das Arbeitsmedium, zur Steuerung des Volumenstroms zum Verdrehkolben verwendet. Folglich wird lediglich die Zufuhrleitung für das Betriebsmedium mit Druck beaufschlagt, wodurch eine Stellbewegung des Verdrehkolbens und eine Mitnahme des Rotors 1.2 und damit eine mittelbare Verdrehung des Hydrostatikmotors folgt. Hierdurch wird die Haftreibung überwunden und in der Folge kann der Innenzahnradmotor als Antrieb des elektrischen Generators 1 verwendet werden.

## Patentansprüche

1. Energieerzeugungseinheit, umfassend
einen elektrischen Generator (1) mit einem Rotor (1.2);
wenigstens einen hydrostatischen Motor zum Antrieb des elektrischen Generators (1), wobei wenigstens einer der hydrostatischen Motoren als Innenzahnradmotor (2) ausgebildet ist;
der Rotor (1.2) des elektrischen Generators (1) umschließt den Innenzahnradmotor (2) konzentrisch, wobei der Rotor (1.2) über eine Innenverzahnung (3) ein Ritzel (4) kämmt, welches wenigstens mittelbar vom Innenzahnradmotor (2) angetrieben wird;
dem Innenzahnradmotor ist eine Anlaufvorrichtung (5) zugeordnet.

2. Energieerzeugungseinheit nach Anspruch 1, **dadurch gekennzeichnet, dass** zusätzlich zum Innenzahnradmotor (2) ein weiterer hydrostatischer Motor verwendet wird, wobei der weitere hydrostatische Motor rotatorisch ausgebildet ist und dessen Drehachse fluchtend mit jener des Innenzahnradmotors (2) ist.

3. Energieerzeugungseinheit nach Anspruch 2, **dadurch gekennzeichnet, dass** der weitere hydrostatische Motor als Anlaufvorrichtung (5) verwendet wird.

4. Energieerzeugungseinheit nach einem der Ansprüche 1 oder 2, **dadurch gekennzeichnet, dass** als Anlaufvorrichtung (5) der elektrische Generator (1) motorisch betrieben wird.

5. Energieerzeugungseinheit nach Anspruch 4, **dadurch gekennzeichnet, dass** eine Zusatzwicklung im elektrischen Generator (1) als Anlaufvorrichtung (5) dient.

6. Energieerzeugungseinheit nach einem der Ansprüche 1 oder 2, **dadurch gekennzeichnet, dass** ein mit dem Arbeitsmedium für den Antriebs des Innenzahnradmotors (2) bewegter Verdrehkolben (5.1) mit einem hierzu transversal beweglichen Verschiebekörper (5.2) als Anlaufvorrichtung (5) verwendet wird, wobei bei einer Stellbewegung des Verdrehkolbens (5.1) der Verschiebekörper (5.2) in eine form- und oder reibschlüssige Anlage zu einer rotierenden Komponente der Energieerzeugungseinheit gebracht wird, deren Mitnahme und Verdrehung zu einer Drehbewegung des Innenzahnradmotors (2) führt.

7. Energieerzeugungseinheit nach einem der Ansprüche 1 bis 6, **dadurch gekennzeichnet, dass** als elektrischer Generator (1) ein Synchrongenerator verwendet wird.

8. Energieerzeugungseinheit nach Anspruch 7, **dadurch gekennzeichnet, dass** als elektrischer Generator (1) ein bürstenloser, fremderregter Synchrongenerator mit integrierter Erregermaschine verwendet wird.

9. Energieerzeugungseinheit nach einem der Ansprüche 1 bis 8, **dadurch gekennzeichnet, dass** das Arbeitsmedium zum Antrieb des Innenzahnradmotors (2) zur Kühlung des elektrischen Generators (1) und dessen Steuerungselektronik verwendet wird.

10. Energieerzeugungseinheit nach einem der Ansprüche 1 bis 9, **dadurch gekennzeichnet, dass** das Arbeitsmedium zum Antrieb des Innenzahnradmotors (2) zur Schmierung der Lagerkomponenten der Energieerzeugungseinheit verwendet wird.

11. Energieerzeugungseinheit nach einem der Ansprüche 1 bis 10, **dadurch gekennzeichnet, dass** der Rotor (1.2) des elektrischen Generators (1) auf dem Gehäuse des Innenzahnradmotors (2) gelagert wird.

12. Energieerzeugungseinheit nach Anspruch 2, **dadurch gekennzeichnet, dass** dem Innenzahnradmotor (2) und dem weiteren hydrostatischen Motor Arbeitsmedium von getrennten Versorgungskreisen zugeführt wird.

## Claims

1. An energy generation unit, including
an electric generator (1) with a rotor (1.2);
at least one hydrostatic motor for driving the electric generator (1), wherein at least one of the hydrostatic motors is designed as an internal gearwheel motor (2);
the rotor (1.2) of the electric generator (1) concentrically encloses the internal gearwheel motor (2), whereas the rotor (1.2) meshes with a pinion (4) by means of an internal toothing (3), which is driven at least indirectly by the internal gearwheel motor (2);
a starting device (5) is allocated to the internal gearwheel motor.

2. An energy generation unit according to claim 1, **characterised in that** a further hydrostatic motor is used in addition to the internal gearwheel motor (2), whereas said further hydrostatic motor is designed rotationally and the rotational axis thereof is aligned with that of the internal gearwheel motor (2).

3. An energy generation unit according to claim 2, **characterised in that** the further hydrostatic motor is used as a starting device (5).

4. An energy generation unit according to one of the claims 1 or 2, **characterised in that** the electrical generator (1) is operated as a motor as a starting device (5).

5. An energy generation unit according to claim 4, **characterised in that** an additional winding in the electric generator (1) serves as a starting device (5).

6. An energy generation unit according to one of the claims 1 or 2, **characterised in that** a rotary piston (5.1) moved with the working medium for driving the internal gearwheel motor (2) is used as a starting device (5) with a sliding body (5.2), which is transversally mobile for that purpose, whereas while the rotary piston (5.1) is moving to adjust its position, the sliding body (5.2) forms an interlocking or friction-locking connection with a rotating component of the energy generation unit, said component being slaved and rotated for driving the internal gearwheel motor (2) into rotation.

7. An energy generation unit according to one of the claims 1 to 6, **characterised in that** a synchronous generator is used as an electric generator (1).

8. An energy generation unit according to claim 7, **characterised in that** a brushless, externally excited synchronous generator machine is used as an electric generator (1) with integrated exciter.

9. An energy generation unit according to one of the claims 1 to 8, **characterised in that** the working medium for driving the internal gearwheel motor (2) is used for cooling the electric generator (1) and the control electronics thereof.

10. An energy generation unit according to one of the claims 1 to 9, **characterised in that** the working medium for driving the internal gearwheel motor (2) is used for lubricating the bearing components of the energy generation unit.

11. An energy generation unit according to one of the claims 1 to 10, **characterised in that** the rotor (1.2) of the electric generator (1) is mounted on the housing of the internal gearwheel motor (2).

12. An energy generation unit according to claim 2, **characterised in that** working medium from separated supply circuits is fed to the internal gearwheel motor (2) and the additional hydrostatic motor.

## Revendications

1. Unité de production d'énergie, comprenant
un générateur électrique (1) pourvu d'un rotor (1.2);
au moins un moteur hydrostatique assurant l'entraînement du générateur électrique (1), dans laquelle au moins l'un des moteurs hydrostatique est conçu comme moteur à roue dentée interne (2);
le rotor (1.2) du générateur électrique (1) entoure concentriquement le moteur à roue dentée interne (2), tandis que le rotor (1.2) engrène un pignon (4) par le biais d'une denture intérieure (3), lequel pignon est entraîné au moins indirectement par le moteur à roue dentée interne (2); un dispositif de démarrage (5) est associé au moteur à roue dentée interne.

2. Unité de production d'énergie selon la revendication 1, **caractérisée en ce qu'**on utilise un autre moteur hydrostatique en plus du moteur à roue dentée interne (2), où le moteur hydrostatique supplémentaire est conçu de manière rotative et son axe de rotation est aligné avec celui du moteur à roue dentée interne (2).

3. Unité de production d'énergie selon la revendication 2, **caractérisée en ce qu'**on utilise le moteur hydrostatique supplémentaire comme dispositif de démarrage (5).

4. Unité de production d'énergie selon l'une quelconque des revendications 1 ou 2, **caractérisée en ce que** le générateur électrique (1) est entraîné de façon motorisée comme dispositif de démarrage (5).

5. Unité de production d'énergie selon la revendication 4, **caractérisée en ce qu'**un bobinage supplémentaire dans le générateur électrique (1) fait office de dispositif de démarrage (5).

6. Unité de production d'énergie selon l'une quelconque des revendications 1 ou 2, **caractérisée en ce qu'**on utilise un piston rotatif (5.1) actionné par le fluide de travail pour entraîner le moteur à roue dentée interne (2) comme dispositif de démarrage (5) avec un élément coulissant (5.2) mobile transversalement pour ce faire, où pendant le mouvement de réglage du piston rotatif (5.1), l'élément coulissant forme une connexion à verrouillage ou à friction avec un composant rotatif de l'unité de production d'énergie, composant dont l'entraînement et la rotation provoquent le mouvement rotatif du moteur à roue dentée interne (2).

7. Unité de production d'énergie selon l'une quelconque des revendications 1 à 6, **caractérisée en ce qu'**on utilise un générateur synchrone comme générateur électrique (1).

8. Unité de production d'énergie selon la revendication 7, **caractérisée en ce qu'**on utilise un générateur synchrone sans balai et à excitation externe comme générateur électrique (1) avec excitateur intégré.

9. Unité de production d'énergie selon l'une quelconque des revendications 1 à 8, **caractérisée en ce qu'**on utilise le fluide de travail assurant l'entraînement du moteur à roue dentée interne (2) pour refroidir le générateur électrique (1) et son électronique de commande.

10. Unité de production d'énergie selon l'une quelconque des revendications 1 à 9, **caractérisée en ce qu'**on utilise le fluide de travail assurant l'entraînement du moteur à roue dentée interne (2) pour lubrifier les composants de palier de l'unité de production d'énergie.

11. Unité de production d'énergie selon l'une quelconque des revendications 1 à 10, **caractérisée en ce que** le rotor (1.2) du générateur électrique (1) est monté sur le bâti du moteur à roue dentée interne (2).

12. Unité de production d'énergie selon la revendication 2, **caractérisée en ce que** le fluide de travail est injecté dans le moteur à roue dentée interne (2) et dans le moteur hydrostatique supplémentaire, à partir de circuits d'alimentation séparés.
